Europäisches Patentamt

European Patent Office

Office européen des brevets

(11) Publication number: **0 046 618**
**A1**

# EUROPEAN PATENT APPLICATION

(21) Application number: 81200906.6

(22) Date of filing: 14.08.81

(51) Int. Cl.³: **F 16 L 47/00**
**F 16 L 41/06**

(30) Priority: 26.08.80 NL 8004820

(43) Date of publication of application:
03.03.82 Bulletin 82/9

(84) Designated Contracting States:
AT BE CH DE FR GB IT LI LU NL SE

(71) Applicant: WAVIN B.V.
251 Händellaan
NL-8031 EM Zwolle(NL)

(72) Inventor: Bollmer, Heinrich
9 Friedhofstrasse
D-4770 Twist(DE)

(74) Representative: van der Veken, Johannes
Adriaan et al,
EXTERPATENT 3 & 4 Willem Witsenplein
NL-2596 BK The Hague(NL)

(54) A device for affixing a drilling saddle on to a pipe.

(57) A device for affixing a drilling saddle 2 on to a pipe comprises a bracket with quick-acting clamps 2a, 2b to be fastened to said pipe and a retaining device 13 being movable and lockable on the bracket, an adjustable spring device exerting a constant pressure on the saddle to be affixed on to the pipe. The retaining device 13 comprises an accessible space for connecting a drilling head 6 to a drilling spindle 18, swing-away clamp halves 16, 17 for the saddle and a bored top cap 14 through which the drilling spindle 18 extends and is slideable.

EP 0 046 618 A1

./...

-1-

## A device for affixing a drilling saddle on to a pipe

The invention relates to a device for affixing a drilling saddle on to a pipe, comprising a bracket provided with quick-acting clamps and intended for being fastened to the pipe, and a retaining device for a saddle, the retaining device being movable and lockable on the bracket by means of a push rod with a hand lever, to enable the saddle to be pressed against the pipe, an adjustable spring device being provided to exert a constant pressure on the saddle to be affixed on to the pipe.

A device of this kind is known in the art and the known bracket is formed by two guide rods each mounted on one half of a quick-acting clamp, so that the space towards the pipe is accessible between two columns. These columns are secured to one another at the top ends by means of a fixed bridging member, through which the push rod is guided and by means of which a hand lever secured to the top end of the push rod can be moved. The push rod terminates in a yoke guided on the columns, and the retaining device for the saddle is situated therebeneath under the influence of a spring device. The retaining device is axially movable with a limited stroke with respect to the push rod so that a constant pressure can be exerted on the saddle by means of the spring device when the saddle has been pressed against the pipe on which the quick-acting clamps have been fixed. The push rod has a locking ring so that it can be locked in a downwardly pressed position against the bridging member. With this system only the saddle can be secured on the pipe, for which purpose the saddle is clamped in the retaining device, a heating element is placed on the pipe, and the saddle is pressed on to this heating element by means of the hand lever. After sufficient heating, the heating element is removed and the saddle is pressed further against the pipe by means of the hand lever, the spring device being compressed and the push rod being secured against the bridging member by means of the locking ring until the assembly has cooled.

After the saddle has been fixed, the device is removed and there is fitted to the pipe a similar device in which a drilling head is fixed on a drilling spindle. The drilling head is placed in the saddle by displacement of the drilling spindle and the latter is also screwthreaded whereby it can be pressed down during a rotary movement so that the wall of the pipe in the saddle is drilled. After the hole has been formed in the pipe and hence also in the saddle, this second device is removed from the pipe and the drilling head is withdrawn from the saddle, whereupon the passage for the drilling head is closed by means of a cap.

The disadvantage of this known system is that two completely separate operations are required, i.e. fixing the saddle and drilling the pipe. In addition, another device has to be used for the drilling operation and has to be adjusted and secured very accurately with respect to the shaft in the saddle. This accuracy is much greater than situating the fixing device for the saddle, because the drilling spindle must be exactly in line with the centre-line of the shaft in the saddle.

It is an object of the invention to provide a novel device whereby the saddle can be affixed and the pipe drilled without any separate device requiring handling after the saddle has been affixed.

According to the invention, this is attained with a device of the type described hereinbefore, which is characterized in that the retaining device has an accessible space for the connection of a drilling head to a drilling spindle which is axially movable with respect to the retaining device. ·

A practical embodiment of the device according to the invention is further characterized in that the retaining device is provided with swing-away clamp halves for the saddle and has a bored top cap through which the drilling spindle extends and is displaceable in said top cap and in that an internal screwthread is provided on the drilling spindle engaging therein on displacement of said drilling spindle.

According to a further feature of the invention, the retaining device has a shaft extending around the drilling spindle fitted therein, said shaft being telescopically movable in the push rod with a limited stroke, the push rod being hollow to allow the passage of the drilling spindle.

The invention in a further aspect relates to a drilling head for use in this device, said drilling head being provided with

-4-

means for temporarily connecting to the drilling spindle. The invention is also embodied in a drilling saddle, the shaft of which has an internal collar at the end remote from a welding collar, in order to retain a drilling head.

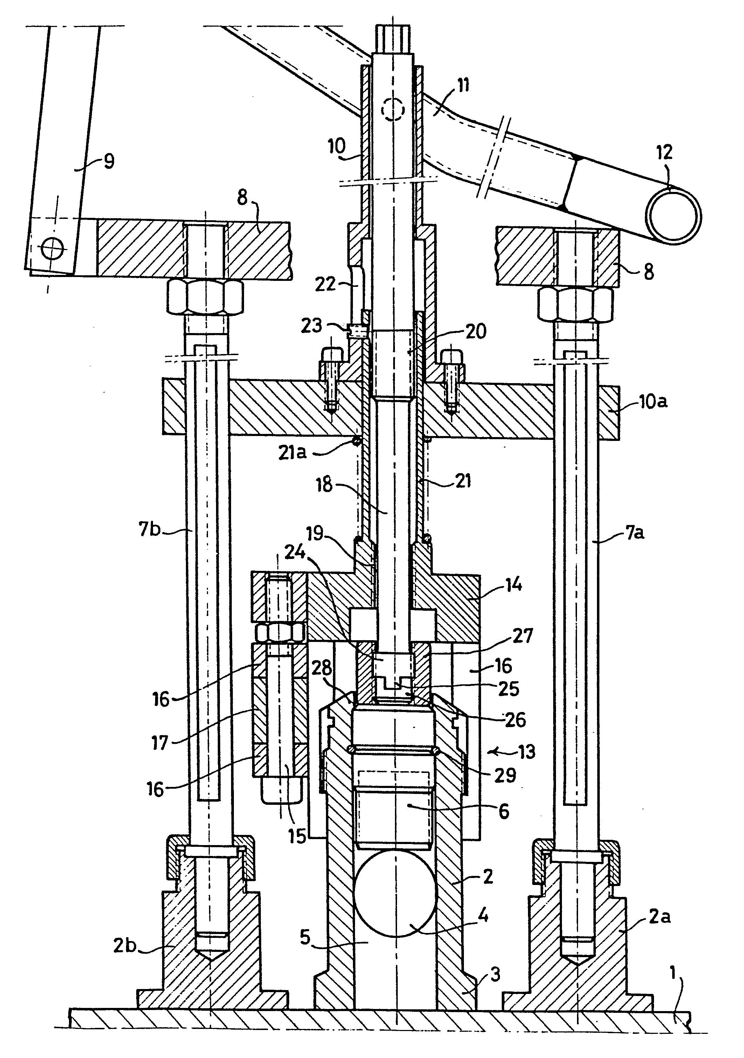

The invention will be described in detail with reference to the accompanying drawing.

The drawing is a cross-section of the top part of a pipe with a drilling saddle according to the invention affixed thereto, and a device for affixing said drilling saddle, also in section.

To affix a drilling saddle, there is placed on the top part of a pipe 1 a device formed by two spaced half clamps.2a and 2b, whereupon a common co-acting half is placed on the bottom part of the pipe 1 (not shown) and secured to the top clamp halves 2a and 2b by means of clamping bolts. The diameter of the opening formed by the clamp halves is adapted to the diameter of the pipe 1. The drilling saddle as used is also adapted to this diameter of the pipe 1. Drilling saddles of this kind are generally known and have a welding collar 3 adapted to the diameter of the pipe 1, a lateral spigot 4 and a shaft 5 for the passage of the fluid from the pipe 1 to the spigot 4 after a hole has been drilled in the wall of the pipe 1 beneath the shaft 5. The latter is also used here to guide a drilling head 6. A bracket in the form of two guide and support rods 7a and 7b is fitted on the clamp halves 2a and 2b, which latter are constructed as quick-acting clamps. The rods 7a and 7b are interconnected rigidly at the top ends by means of a bridging member 8 provided with a laterally projecting arm, to which a link 9 is pivotally secured. A push rod 10 pivotally secured to a hand lever 11 extends through the bridging member 8. Hand lever 11 is also pivotally secured to the top end of the link 9. The push rod 10 can thus be moved downwards by means of a hand crank to press the drilling saddle 2 against the pipe 1. A retaining device 13 is used for this saddle and is formed by a top cap 14 with a pivot in the form of a bolt 15. Two clamp halves pivot about the pivot 15, the half 16 being visible in the drawing while only a portion of the co-acting half is visible, i.e. the portion 17 situated around the bolt 15. The clamp halves 16 and 17 can be secured in their closed position and enclose a saddle 2, by means of a quick-acting coupling, for example in the form of a toggle.

It will be apparent that the use of these two clamp halves 16 and 17 provides in the retaining device 13 an accessible space for connecting a drilled head 6 to a drilling spindle 18 when the clamp halves are opened. Drilling spindle 18 is axially movable with respect to the retaining device 13. To this end, the top cap 14 has a bore through which the drilling spindle 18 is slideable. This bore comprises internal screwthread 19 and an external screwthread on the drilling spindle 18 fits into the screwthreaded portion after displacement of the drilling spindle 18.

The retaining device 13 also comprises a shaft 21 extending around the drilling spindle 18 fitted therein and being telescopically movable with a limited stroke in the push rod 10. This limited stroke is obtained in that the push rod 10 comprises a slot 22 into which fits a pin 23 secured in the shaft 21. The push rod 10 is also of hollow construction like

-6-

the shaft 21 to allow the passage of the drilling spindle 18. Push rod 10 is mounted on a yoke 10a which is guided and displaceable on the rods 7a and 7b. This yoke can be locked in an arbitrary position on the rods 7a and 7b by clamping bolts (not shown). In the position of the device as illustrated in the drawing the saddle 2 has been pressed on to the pipe 1 and the yoke 10a is secured on the rods 7a, 7b. The push rod 10 is pressed down by means of the hand lever 11 together with the yoke 10a until the spring 21a is compressed with a certain tension to press the retaining device 13 together with the drilling saddle 2 firmly on the pipe 1 after removal of a heating element previously inserted therebetween.

After the drilling system has been fitted on to the pipe, the saddle 2 already containing a drilling head 6 is placed and secured in the retaining device 13. The drilling head 6 is simultaneously fixed on the drilling spindle. To this end, the drilling spindle 18 has a screwthreaded portion 24 at the place of connection of the drilling head 6, for securing to the latter, said portion 24 being provided with a part 25 of a dog coupling. Drilling head 6 is also provided with means for temporarily securing the latter to the drilling spindle 18, the top end of the latter being provided with a screw stud 26, the top surface of which comprises part of a dog coupling co-operating with part 25 thereof. The system is secured by means of a nut 27 screwed on to the two screwthreaded parts 24 and 26. The surfaces to be welded positioned between the pipe and the downwardly pressed saddle are then heated, whereupon the drilling saddle is welded on the pipe.

A wrench which fits the head of the drilling spindle 18 is is then used to press the spindle down until the screwthreaded part 20 reaches the internal screwthread 19 in the top cap 14 of the retaining device 13. Drilling head 6 is then pressed down in the shaft 5 of the saddle 2 and comes into position above the edge of the pipe 1. As the spindle 18 rotates the screwthread 20 will be screwed into the internal screwthread 19 of the top cap 14, so that the drilling head 6 is pressed down with pressure and drills a hole in the wall of the pipe 1.

After the hole has been formed in the pipe 1, the spindle 18 is unscrewed and the yoke 10a is released, so that the entire system can be moved upwards after the clamp halves 16 and 17 have been opened. The nut 27 is then screwed in an upward direction on the spindle so that the screwhead 26 is released and the whole can be removed by opening the clamp halves 2a and 2b.

In the embodiment illustrated, the shaft of the drilling saddle 2 comprises an internal collar 28 at the end remote from the welding collar 3, to retain the drilling head 6 which remains in the drilling saddle in this embodiment.

To this end, an annular chamber 29 is provided at distance from the internal collar 28 in the shaft 5, to receive a sealing ring. A closure cap is subsequently screwed on to the drilling saddle 2 in a known manner.

-1-

CLAIMS

1.     A device for affixing a drilling saddle on to a pipe, comprising a bracket provided with quick-acting clamps, intended for being fastened to the pipe, and a retaining device for the saddle, said retaining device being movable and lockable on the bracket by means of a push rod with a hand lever, to enable the saddle to be pressed against the pipe, an adjustable spring device being provided to exert a constant pressure on the saddle to be affixed on to the pipe, characterized in that the retaining device (13) has an accessible space for the connection of a drilling head (6) .. to a drilling spindle (18) which is axially movable with respect to the retaining device.

2.     A device according to claim 1, characterized in that the retaining device (13) comprises swing-away clamp halves (16, 17) for the saddle (2) and a bored top cap (14) through which the drilling spindle (18) extends and is slideable in said top cap.

3.     A device according to claims 1 and 2, characterized in that an internal screwthread (19) is provided in the top cap an external screwthread (20) provided on the drilling spindle (18) engaging therein on displacement of said drilling spindle.

4.     A device according to claims 1 to 3, characterized in that the retaining device (13) comprises a shaft (21) extending around the drilling spindle (18) fitted therein, said shaft being telescopically movable in the push rod (10) with a limited stroke, said push rod being hollow to allow the passage of the drilling spindle (18).

5. A device according to claims 1 to 4, in which the push rod is mounted on a yoke which is movably guided on rods and against which bears a spring acting on the retaining device, characterized in that the movable yoke (10a) is provided with clamping bolts to lock said yoke on the rods (7a and 7b).

6. A device according to claims 1 to 3, characterized in that the drilling spindle (18) has a screwthreaded portion (24) at the place of the drilling head (6) connection for the purpose of being secured to the latter.

7. A device according to claim 6, characterized in that the screwthreaded portion (24) of the drilling spindle (18) is provided with part (25) of a dog coupling.

8. A drilling head for use in a device according to one or more of the claims 1 to 7, characterized in that the drilling head (6) is provided with means for temporarily connecting to the drilling spindle (18).

9. A drilling head according to claim 8, characterized in that the top of the drilling head is provided with a screw stud (26), the top surface of which comprises part of a dog coupling co-operating with part (25) thereof.

10. A drilling saddle provided with a welding collar adapted to a pipe, and a branch spigot and a shaft for the passage of a drilling head, characterized in that the shaft (5) has an internal collar (28) at the end remote from the welding collar ( 3) to retain a drilling head (6) according to claims 8 or 9.

11. A drilling saddle according to claim 10, characterized in that the shaft (5) comprises an annular chamber (29) situated at distance from the internal collar (28), te receive a sealing ring.